# EUROPEAN PATENT APPLICATION

(11) **EP 2 271 146 A1**
(43) Date of publication of application: **05.01.2011**
(21) Application number: 09305628.1
(22) Date of filing: 30.06.2009
(51) Int. Cl.: H04W 12/06

(54) **Authentication method and system**

(71) Applicant: FRANCE TELECOM, 75015 Paris (FR)
(72) Inventor: Kim, Youngki, Bundang-Gu, Seongnam, Gyeonggi-Do (KR)

(57) **Abstract**

A method for authenticating at least one user equipment (120) onto a telecommunication network (150) using a Subscriber Identity Module (100, 102), said at least one user equipment (120) comprising a Subscriber Identity Module socket (103) and means (130) for communicating with a remote Subscriber Identity Module (100), said method comprising the act of, upon detection of activation of said means (130), authenticating the user equipment (120) using said remote Subscriber Identity Module (100) instead of using a Subscriber Identity Module (102) that may be inserted in said Subscriber Identity Module socket (103).

## Description

### Field of the Invention

The present invention relates in general to telecommunication user equipments and more specifically to authentication of a user equipment on a telecommunication network.

### Background of the Invention

Authentication is required for user equipments of a telecommunication network, and in particular for mobile user equipments, in order to be allowed to access said telecommunication network.

The authentication process of a mobile user equipment with a telecommunication network comprises the exchange of data between the mobile user equipment and the telecommunication network.

On the network side, the telecommunication network comprises an authentication server that allows processing the authentication data received from the mobile user equipment in order to allow the mobile user equipment to access the telecommunication network or not.

On the mobile user equipment side, a Subscriber Identity Module (SIM) embedded in a removable SIM Card securely stores the authentication data. The SIM card allows users to change phones by simply removing the SIM card from one mobile user equipment and inserting it into another mobile user equipment or broadband telephony user equipment. The authentication data comprise the unique International Mobile Subscriber Identity (IMSI) used to identify a subscriber on mobile user equipments (such as computers and mobile phones), the SIM unique serial number, security authentication and ciphering information, temporary information related to the local network (also temporary local id that has been issued to the user), list of the services the user has access to and two passwords (regular Personal Identification Number (PIN) and Personal Unblocking Key (PUK)).

SIM cards are available in two standard sizes. The first is the size of a credit card (85.60 mm × 53.98 mm x 0.76 mm). The newer, more popular miniature-version has a width of 25 mm, a length of 15 mm, and a thickness of 0.76 mm. However, most SIM cards are still supplied as a full-sized card with the smaller card held in place by a few plastic links and can be easily broken off to be used in a phone that uses the smaller SIM.

On one hand, as SIM cards are standardized for most of existing mobile user equipment today, they are compulsory for the use of said mobile user equipments.

On the other hand, when the user loses or gets his mobile user equipment stolen, the inserted SIM card is lost or stolen along with the mobile user equipment.

Today there is no solution to efficiently prevent the compulsory SIM card to be lost or stolen along with a mobile user equipment thus improving security for users of such telecommunication networks.

Today there is a need for a telecommunication solution that can be easily implemented on the existing communication infrastructures.

### Summary of Invention

It is an object of the present system to overcome disadvantages and/or make improvement over the prior art.

To that extend, the invention proposes a method for authenticating at least one user equipment (120) onto a telecommunication network (150) using a Subscriber Identity Module (100, 102), said at least one user equipment (120) comprising a Subscriber Identity Module socket (103) and means (130) for communicating with a remote Subscriber Identity Module (100), said method comprising the act of, upon detection of activation of said means (130), authenticating the user equipment (120) using said remote Subscriber Identity Module (100) instead of using a Subscriber Identity Module (102) that may be inserted in said Subscriber Identity Module socket (103).

The invention also proposes a telecommunication system according to claim 6.

The invention also proposes a user equipment according to claim 11.

The invention also proposes a readable computer program according to claim 16.

The method and system according to the invention allow a user to keep his SIM card connected to his mobile user equipment but not inserted or embedded into said mobile user equipment at the same time. This prevents the SIM card to be lost or stolen along with the mobile user equipment and vice and versa.

Another advantage of the present invention resides in the fact that the user may use one SIM card with several mobile user equipments without removing the SIM card from one mobile user equipment to insert it into another mobile user equipment. Indeed, the connection between the SIM card and the mobile user equipment is realized through the human body when the mobile user equipment and the SIM card are both touched by the user.

In particular, a major advantage of the invention is that the same SIM may be used at the same time with a plurality of user equipments, which no existing solution can do today. This allows, for example, connecting to several telecommunication networks or having a plurality of connections with different user equipments on the same telecommunication network.

### Brief Description of the Drawings

Embodiments of the present invention will now be described solely by way of example and only with reference to the accompanying drawings, where like parts are provided with corresponding reference numerals, and in which:
Figure 1 schematically describes a system according to an illustrative embodiment of the present invention;
Figure 2 schematically describes a method according to an illustrative embodiment of the present invention;
Figure 3 schematically describes a system according to an illustrative embodiment of the present invention;
Figure 4 schematically describes a system according to an illustrative embodiment of the present invention;
Figure 5A schematically describes a system according to an illustrative embodiment of the present invention;
Figure 5B schematically describes a system according to an illustrative embodiment of the present invention;
Figure 5C schematically describes a system according to an illustrative embodiment of the present invention;
Figure 6 schematically describes a method according to an illustrative embodiment of the present invention.

### Description of Preferred Embodiments

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, devices etc..., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, gateways or other entities in a telecommunication network are not detailed as their implementation is beyond the scope of the present system and method.

Unless specified otherwise, the exemplary embodiment will be described hereafter in its application to a user equipment of a wireless telecommunication network.

In addition, it should be expressly understood that the drawings are included for illustrative purposes and do not represent the scope of the present system.

The present invention is described for the use with a mobile user equipment, but this is in no way limiting the scope of the present invention as it could be used for any user equipment (computer, phone etc...) requiring an authentication unit or Subscriber Identity Module for authenticating onto a network.

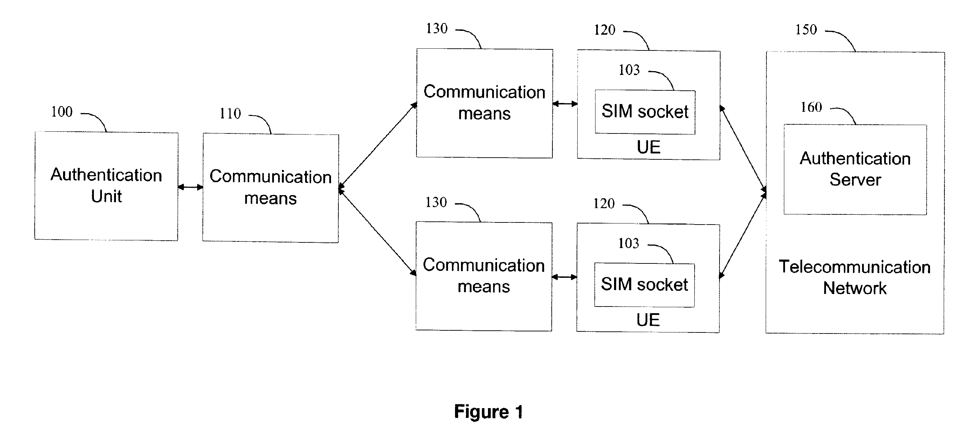

Figure 1 describes an exemplary embodiment of the system according to the present invention.

The system comprises:
- an authentication unit 100, hereafter called remote Subscriber Identity Module;
- at least one user equipment (UE) 120 comprising a Subscriber Identity Module socket 103 that allows inserting a Subscriber Identity Module 102;
- means 110 for conducting current to and from the Subscriber Identity Module (SIM) 100 in order to communicate with the at least one user equipment 120;
- means 130 for conducting current to and from each user equipment 120 in order to communicate with the Subscriber Identity Module 100;
- a telecommunication network 150 comprising an authentication server 160.

The authentication server 160 allows processing the authentication data exchanged between the SIM 100 and the UE 120 through means 110 and 130. The authentication data received by the UE 120 from the SIM 100 are sent by the UE 120 to the authentication server 160 via the telecommunication network 150. According to the received information, the authentication server 160 grants or not access to the UE 120 onto the telecommunication network 150.

Means 110 and 130 may be electrical interfaces which allow conducting current in order to communicate or exchange data between Subscriber Identity Module 100 and each user equipment 120. Communications between means 110 and 130 may be operated using for example electromagnetic fields, radio waves or the human body to conduct current.

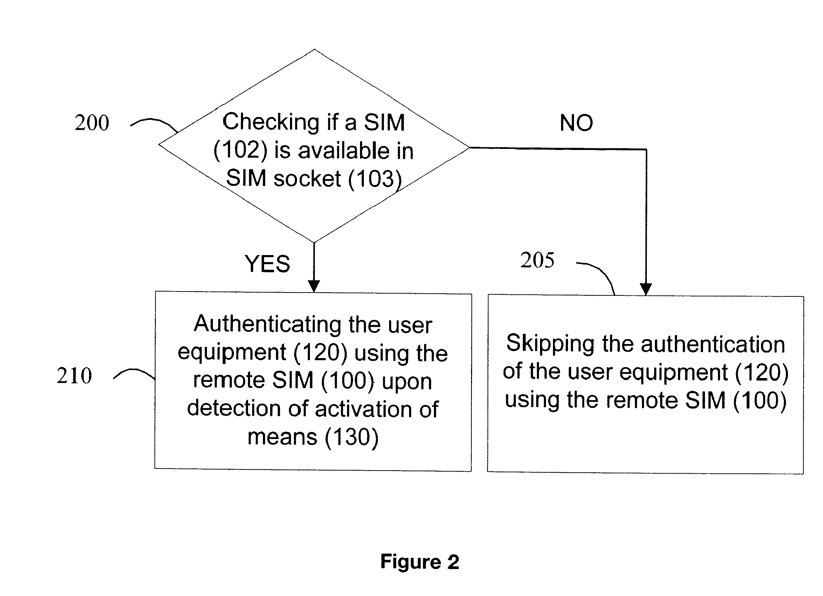

Figure 2 describes an exemplary embodiment of the method according to the invention.

This exemplary embodiment of the method according to the invention allows authenticating at least one user equipment (120) onto a telecommunication network (150) using a Subscriber Identity Module (100, 102).

Said at least one user equipment (120) comprises a Subscriber Identity Module socket (103) and means (130) for communicating with a remote Subscriber Identity Module (100). The Subscriber Identity Module socket (103) allows inserting a Subscriber Identity Module (102).

Upon detection of activation of means (130), an act 210 allows authenticating the user equipment (120) using said remote Subscriber Identity Module (100) instead of using a Subscriber Identity Module (102) that may be inserted in said Subscriber Identity Module socket (103).

In a additional embodiment of the method according to the invention, an optional act 205 allows checking if a Subscriber Identity Module (102) is available in the Subscriber Identity Module socket (103) of the user equipment (120). In this case, the act 210 of authenticating may be skipped or not being carried out (act 205) if a Subscriber Identity Module (102) is available in the Subscriber Identity Module socket (103) of the user equipment (120).

Authentication data allows authenticating the user or subscriber corresponding to the Subscriber Identity Module (100, 102) onto the telecommunication network 150 associated with the Subscriber Identity Module (100, 102). Authentication data may be for instance usual International Mobile Subscriber Identity (IMSI), Personal Identification Number (PIN), Personal Unblocking Key (PUK), etc... Authentication data stored on the Subscriber Identity Module 100 are sent via the and interconnecting means 110 and 130 and the user equipment 120, in either push or pull mode, to the authentication server 160 of the telecommunication network 150 referring to Figure 1. The authentication server 160 may request extra authentication data by sending messages to the Subscriber Identity Module 100 via the user equipment 120 and interconnecting means 110 and 130.

Interconnecting means 110 and 130 are physical communication interfaces that allow exchanging or communicating data between the Subscriber Identity Module 100 and the user equipment 120.

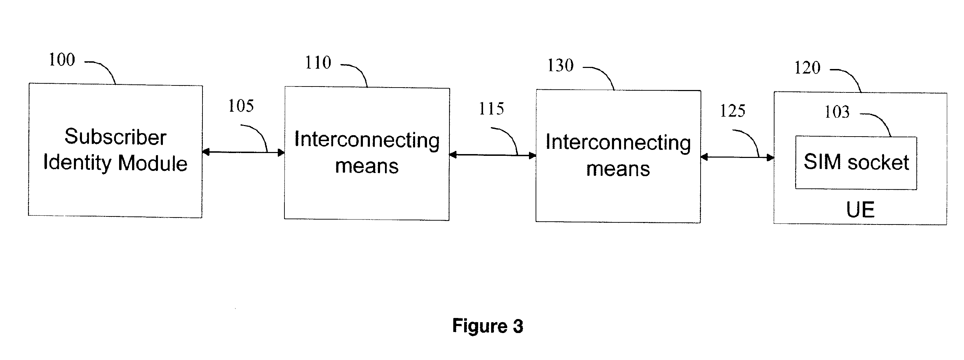

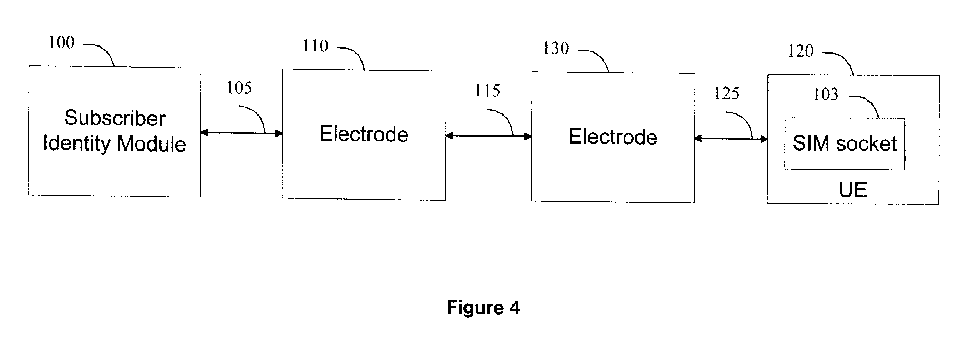

An embodiment illustrating interconnecting means 110 and 130 will be described here under in reference to Figures 3 and 4.

The method according to the invention allows authenticating, using one SIM 100, a plurality of UE 120 onto the telecommunication network 150. The exchange of authentication data may be performed simultaneously between one Subscriber Identity Module 100 and a plurality of mobile user equipments 120.

Indeed, the interconnection means 110 allow the Subscriber Identity Module 100 to communicate with a plurality of interconnection means 130, each of which being associated with a mobile user equipment 120.

In other words, when there are a plurality of mobile user equipments 120, a plurality of corresponding means 130 may be used to interconnect with means 110 of the Subscriber Identity Module 100.

When there are a plurality of user equipment 120 and corresponding interconnecting means 130, the method according to the invention allows authenticating simultaneously the user using SIM 100 through the plurality of user equipments 120. Indeed, messages comprising the authentication data sent by the Subscriber Identity Module 100 may be sent at the same time to several user equipments 120 through interconnecting means 110 and 130. And, similarly, messages sent by the authentication server 160 through the telecommunication network 150 may be received at the same time on the Subscriber Identity Module 100 through interconnecting means 110 and 130 and user equipment 120.

Figure 3 describes an illustrative embodiment of interconnecting means according to the invention.

The interconnecting means between the mobile user equipment and Subscriber Identity Module comprise means 110 and means 130.

The Subscriber Identity Module 100 is connected to interconnecting means 110 through a link 105.

The user equipment 120 is connected to interconnecting means 130 through a link 125.

Links 105 and 125 may be for example an electronic connection (e.g. through pin connection), a wireline or a wireless connection...

Interconnecting means 110 and 130 communicate through a link 115. Link 115 may be any type of communication interface that allows communicating data, in particular a wireless interface.

The interconnecting means 110 may comprise a wireless interface, said wireless interface allowing communication between the user equipment (120) and the remote Subscriber Identity Module (100).

The interconnecting means 130 may comprise a wireless interface, said wireless interface allowing communications between the user equipment (120) and the remote Subscriber Identity Module (100).

Wireless interfaces comprised in means 110 and 130 for communication between the Subscriber Identity Module 100 and the mobile user equipment 120 may operate using, for example, electromagnetic fields, radio or micro waves or the human body to conduct current.

Radio, micro waves and electromagnetic fields transmit over the air and may consequently be intercepted. On the opposite, human body currents may be used to exchange communication data without interception of said communication data in the air, which increases the security of the user when communicating authentication data.

Figure 4 describes an illustrative embodiment of the invention, wherein interconnecting means 110 and 130 are human body interconnection means.

The wireless interface uses the human body communication (HBC) protocol for communicating between the user equipment (120) and the remote Subscriber Identity Module (100).

In this case, human body interconnection means (110, 130) may comprise electrodes or conductive contact parts that allow currents to run through the human body when applied onto the skin. Link 115 comprises in this case the human body as a conductor for conveying electrical currents that carry communication data between interconnecting means 110 and 130.

In order to communicate authentication data, the Subscriber Identity Module 100 exchanges said authentication data with electrode 110.

Electrode 110 exchanges authentication data with electrode 130 through the user's body.

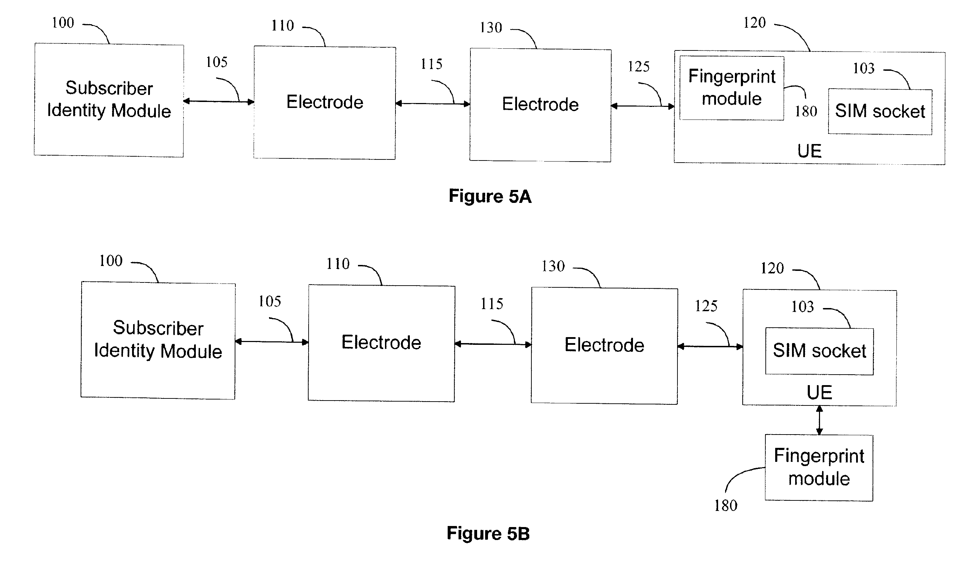

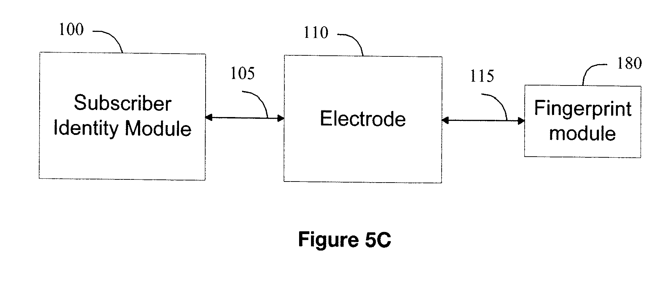

Figures 5A, 5B and 5C describes an illustrative embodiment of the invention, wherein human body interconnection means are secured.

Securing human body interconnection means allows preventing fraud by exchanging authentication data without the user's will. Indeed, as communication of data using human body currents is performed on contact of communication devices (Subscriber Identity Module and user equipment), any physical contact of electrodes 110 and 130 (referring to Figure 4) simultaneously with the user's body would allow communication of authentication data to any third-party device by simply touching the user.

Consequently, securing means may involve for example using a fingerprint or a code identification to identify the user prior to exchanging authentication data in order for said user further allow communication of authentication data.

As described on Figure 5A, the user equipment 120 may comprise a fingerprinting module 180 in order to preliminary store the identification fingerprint of the user and further use said stored identification fingerprint to allow the user authenticating on the telecommunication network 150 through his user equipment 120 using his associated Subscriber Identity Module 100.

As described on Figure 5B and 5C, the fingerprint module 180 may also be an external module, in other words it may not necessarily be comprised in the user equipment 120 and be used and accessed remotely as an external device.

In Figure 5B, the fingerprint module 180 is connected to the user equipment 120. For example, this allows, as in Figure 5A, the user equipment 120 managing the fingerprint authentication.

In Figure 5C, the fingerprint module 180 may be directly accessed by the user by touching a conductive part of the fingerprint module 180 in order to store or identify his fingerprint on the Subscriber Identity Module 100.

Illustrative embodiments described in Figure 5B and 5C allow the user to perform fingerprint identification via the fingerprint module 180 and manipulate the user equipment 120 independently as the fingerprint module 180 is not embedded onto the user equipment 120 as in Figure 5A.

A control module may also be:
- embedded either on the Subscriber Identity Module 100 or on the user equipment 120, or,
- added externally or in between elements (100, 110, 130, 120).

This control module may control or manage the storing and identification of the user's fingerprint, wherein the storing is performed prior to identification as a preliminary step and the identification is performed prior to allowing the user to exchange authentication data stored on the SIM 100 with telecommunication network 150 via user equipment 120.

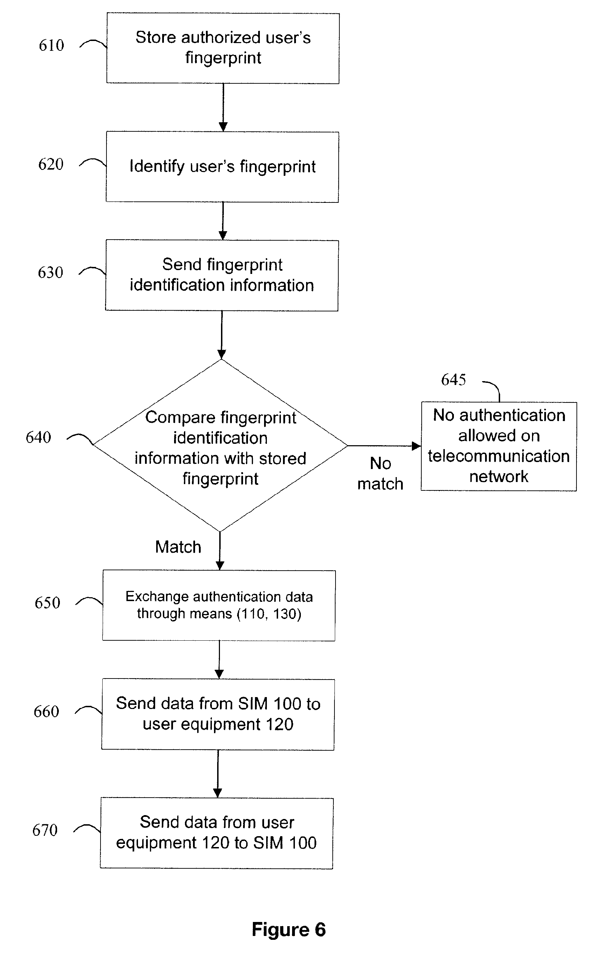

Figure 6 describes an illustrative embodiment of the invention, wherein the user performs an authentication onto a telecommunication network.

In order to allow the exchange of data between the Subscriber Identity Module 100 and the telecommunication network 150 through user equipment 120, electrode or conductive contact part 110 should in contact with the user, e.g. with the user's skin.

In a preliminary act 610, the user registers or stores his fingerprint into the Subscriber Identity Module 100 via the fingerprint module 180.

In act 620, the user identifies his fingerprint on the fingerprint module 180.

In act 630, the fingerprint module 180, optionally managed by a control module, sends the fingerprint information obtained during act 620 to the Subscriber Identity Module 100 where the user's fingerprint has been stored following act 610.

In act 640, the comparison of the user's fingerprint with the stored fingerprint is performed in order to check whether they match or not.

In act 645, if the fingerprint identification information provided in act 620 does not match the stored fingerprint obtained in act 610, then the user is not allowed to identity himself onto the telecommunication network 150.

In act 650, when identification of the user is positive, i.e. when the user's fingerprint matches with the stored fingerprint, authentication data are exchanged between the Subscriber Identity Module 100 and the user equipment 120 via interconnecting means 110 and 130 to allow the authentication of the user onto telecommunication network 150.

In an optional act 660, other data stored on the Subscriber Identity Module 100 such as the list of contacts of the user or some Short Text Messages (SMS) may be sent to the user equipment 120 via interconnecting means 110 and 130.

Similarly, in optional act 670, information or updates of data received from the telecommunication network 150 or managed by the user equipment 120 may be sent to the Subscriber Identity Module 100 by the user equipment 120 via interconnecting means (110, 130).

In this illustrative embodiment of the method according to the invention, optional acts (200, 205) referring to Figure 2 of checking if a SIM (102) is available in the SIM socket (103) may be carried out prior or after the user's identification (in other words, at any time between before act 610 and before act 650, but before act 650).

The Subscriber Identity Module 100 may be for example a mobile SIM, a credit card authentication unit or any authentication module allowing the storage of authentication data...

User equipment 120 may be a mobile or a fixed user equipment.

## Claims

1. A method for authenticating at least one user equipment (120) onto a telecommunication network (150) using a Subscriber Identity Module (100, 102), said at least one user equipment (120) comprising a Subscriber Identity Module socket (103) and means (130) for communicating with a remote Subscriber Identity Module (100), said method comprising the act of, upon detection of activation of said means (130), authenticating the user equipment (120) using said remote Subscriber Identity Module (100) instead of using a Subscriber Identity Module (102) that may be inserted in said Subscriber Identity Module socket (103).

2. A method according to claim 1, said method further comprising an act of checking if a Subscriber Identity Module (102) is available in the Subscriber Identity Module socket (103) of the user equipment (120), the act of authenticating being skipped if a Subscriber Identity Module (102) is available in the Subscriber Identity Module socket (103) of the user equipment (120).

3. A method according to any of the preceding claims, wherein the means (130) comprise a wireless interface, said wireless interface allowing communications between the user equipment (120) and the remote Subscriber Identity Module (100).

4. A method according to claim 3, wherein the wireless interface uses the human body communication (HBC) protocol for communicating between the user equipment (120) and the remote Subscriber Identity Module (100).

5. A method according to any of the preceding claims, said method further comprising an act of user's identification prior to authentication of the user equipment (120).

6. A telecommunication system comprising:
- a telecommunication network (150) comprising an authentication server 160,
- a user equipment (120) comprising a Subscriber Identity Module socket (103) and means (130) for communicating with a remote Subscriber Identity Module (100), said user equipment (120) being operable to, upon detection of activation of said means (130), authenticate with the authentication server (160) using said remote Subscriber Identity Module (100) instead of using a Subscriber Identity Module (102) inserted in said Subscriber Identity Module socket (103).

7. A telecommunication system according to claim 6, wherein the user equipment (120) is further operable to check if a Subscriber Identity Module (102) is available in the Subscriber Identity Module socket (103) and skip the authentication with the authentication server (160) if a Subscriber Identity Module (102) is available in the Subscriber Identity Module socket (103) of the user equipment (120).

8. A telecommunication system according to any of the preceding claims 6 and 7, wherein the means (130) comprise a wireless interface, said wireless interface allowing communications between the user equipment (120) and the remote Subscriber Identity Module (100).

9. A telecommunication system according to claim 8, wherein the wireless interface uses the Human Body Communication (HBC) protocol for communicating between the user equipment (120) and the remote Subscriber Identity Module (100).

10. A telecommunication system according to any of the preceding claims 6 to 9, said telecommunication system being further operable to perform user's identification prior to authentication of the user equipment (120).

11. A user equipment (120) for authenticating onto a telecommunication network (150) using a Subscriber Identity Module (100, 102), said user equipment (120) comprising a Subscriber Identity Module socket (103) and means (130) for communicating with a remote Subscriber Identity Module (100), said method comprising the act of, upon detection of activation of said means (130), authenticating the user equipment (120) using said remote Subscriber Identity Module (100) instead of using a Subscriber Identity Module (102) that may be inserted in said Subscriber Identity Module socket (103).

12. A user equipment (120) according to claim 11, said user equipment (120) being further operable to check if a Subscriber Identity Module (102) is available in the Subscriber Identity Module socket (103) and skip the authentication with the authentication server (160) if a Subscriber Identity Module (102) is available in the Subscriber Identity Module socket (103) of the user equipment (120).

13. A user equipment (120) according to any of the preceding claims 11 and 12, wherein the means (130) comprise a wireless interface, said wireless interface allowing communications between the user equipment (120) and the remote Subscriber Identity Module (100).

14. A user equipment (120) according to claim 13, wherein the wireless interface uses the Human Body Communication (HBC) protocol for communicating between the user equipment (120) and the remote Subscriber Identity Module (100).

15. A user equipment (120) according to any of the preceding claims 11 to 14, said user equipment (120) being further operable to perform user's identification prior to authentication of the user equipment (120).

16. A computer program product for a data-processing device, the computer program product comprising a set of instructions which, when loaded into the data-processing device, causes the device to perform the acts of the method according to claims 1 to 5.
